# EUROPEAN PATENT SPECIFICATION

(11) **EP 2 171 985 B1**
(45) Date of publication and mention of the grant of the patent: **07.03.2012**
(21) Application number: 08775853.8
(22) Date of filing: 04.07.2008
(51) Int. Cl.: H04L 29/08, H04L 29/06, G06F 3/14, G06F 3/023

(54) **CONNECTION BETWEEN A CLIENT DEVICE AND MULTIPLE HOST DEVICES**
VERBINDUNG ZWISCHEN EINEM CLIENT-GERÄT UND MEHREREN HOST-GERÄTEN
CONNEXION ENTRE UN DISPOSITIF CLIENT ET DE MULTIPLES DISPOSITIFS HÔTES

(30) Priority: 06.07.2007 GB 0713149
(43) Date of publication of application: 07.04.2010
(73) Proprietor: DISPLAYLINK (UK) LIMITED, Mount Pleasant Cambridge CB3 0RN (GB)
(72) Inventor: AKESTER, Richard, John, Noel, Cambridge CB1 2XN (GB)
(74) Representative: Turner, Richard Charles
(86) International application number: PCT/GB2008/002305
(87) International publication number: WO 2009/007693

(56) References cited:
- US-A1- 2004 221 009
- US-A1- 2005 066 106
- US-A1- 2006 053 212
- US-A1- 2006 123 182

## Description

This invention relates to a method of handling a connection between a client device and a plurality of host devices, and the system comprising the client device and the plurality of host devices. The invention provides a distributed algorithm for KVM switching.

In some computing environments, a single interface will connect to multiple computers. In the simplest case, a user may have a single keyboard, mouse and display device and have two computers running at the same time. A switch is placed between the user's interface devices (keyboard, mouse and display device) and the two computers, which determines which computer is currently connected to the interface devices. In more complicated systems that embody the same principal, a single interface may connect remotely via a wide area network to multiple computers in a remote location.

US 2005/0066106 discloses an input/output unit access switching system and method that are implemented on a plurality of servers respectively having a baseboard management controller and an intelligent platform management system. The servers are connected to a switching device, itself connected to a set of I/O devices such as keyboard, mouse, and monitor.

KVM (Keyboard, Video, Mouse) is a term describing the ability to control multiple hosts from a single "terminal" (KVM). The keyboard, video and mouse are connected to a KVM switch which determines which of the host devices these client devices are controlling. There is an agreed method by which the KVM switch is signalled in order to execute the decision to switch to connection to another host (for example via a hotkey on the keyboard).

In a traditional IP KVM environment, the KVM switch is physically attached to the hosts it is controlling, thus defining the set of hosts that the switch (and connecting clients can control). Adding hosts (hosts becoming active or connected) and removing hosts (hosts becoming deactive or disconnected) is detected by the switch which can change the group membership details. The switch controls access to this group of hosts, usually requiring credentials from the client before allowing access. The protocol running over the IP network may be proprietary to the specific KVM switch vendor, or may be an open protocol such as VNC.

Improvements in KVM switching have been proposed. For example, United States of America Patent Application Publication US 2006/0123182 discloses a distributed KVM and peripheral switch. This Publication relates to a system and method for switching keyboard and mouse devices and video displays, as well as USB peripheral devices, between USB hosts and video sources over extended distances. There is described a distributed KVM and peripheral switch, where a USB keyboard and mouse is emulated to the host interfaces of the KVM and peripheral switch and a USB host is emulated to keyboard and mouse interfaces of the KVM and peripheral switch. In addition, the keyboard, mouse, display and peripheral devices are separated from the hosts and video sources by a non-USB communications channel. The principal disadvantage of the system disclosed in this Publication is that all routing and addressing is carried out by a separate master controller.

It is therefore an object of the invention to improve upon the known art.

According to a first aspect of the present invention, there is provided a method of handling a connection between a KVM client device and a plurality of host devices, the method providing a distributed algorithm for KVM switching and comprising connecting the client device to a host device of the plurality of host devices, transmitting a message from the client device to the connected host device, the message requesting transferring the connection to a different host device, the connected host device disconnecting the connection to the client device, and the different host device connecting to the client device.

According to a second aspect of the present invention, there is provided a system comprising a KVM client device and a plurality of host devices, and for handling a connection between the client device and the plurality of host devices and for providing a distributed algorithm for KVM switching, wherein the system is arranged to connect the client device to a host device of the plurality of host devices, the client device is arranged to transmit a message to the connected host device, the message requesting transferring the connection to a different host device, the connected host device is arranged to disconnect the connection to the client device, and the different host device is arranged to connect to the client device.

Owing to the invention, it is possible to provide a new method for switching between hosts, using a distributed algorithm, and relying on the hosts themselves to control which has the current connection to the client device (the KVM). It is suitable only for scenarios where it is possible, or permitted to install software on all of the hosts required to be controlled by the client device. The terminal may be a networked KVM client, for example a keyboard, video display and mouse connected to a NIVO device available from DisplayLink, Inc.

The invention solves the problem of creating a KVM scenario at minimal cost. Traditional IP KVM solutions require a KVM switch at the host end, and a fully functional computer at the client end running a "viewer" and other software to enable the connection and control of the KVM switch. The solution provided by the invention requires no switch (the switching function is in the hosts) and minimal hardware to connect the KVM to the network. The control of KVM switching is usually performed by a central switch. This approach is novel by proposing a distributed algorithm that performs the same functionality without the need for centralised arbitration.

Known IP KVM systems rely on a central switch to control the access of the client device to the host systems. The approach of the invention uses the hosts themselves to perform the switching, reducing cost. In one embodiment, the switching function could be in the KVM client itself, but this increases the complexity, and probably, cost of the client device. For example, a standard PC could be used as the KVM client, but this would lose the cost advantages of using a NIVO.

In the decentralised model utilised by this invention, the KVM client is directly connected to the hosts, and may have connectivity to hosts it does not want (or is not allowed) to control. In this model, the KVM client may have less functionality than a full PC, for example it may comprise a networked keyboard, video display and mouse using a NIVO device available from DisplayLink, Inc.

Initialisation: the KVM client may allow the user to enter the name/address of one of the hosts to be controlled, and send a message to that host requesting service. From this point on, the hosts can control the session and the switching functionality. As an alternative, the hosts may look for the KVM client instead, and the first host that finds the KVM client connects to that KVM client.

In one embodiment, the step of connecting the client device to a host device of the plurality of host devices is initiated by the client device. In a second embodiment, the step of connecting the client device to a host device of the plurality of host devices is initiated by a host device. Either there is stored, at the client device, an address of a host device (or some network management component), this address being used when connecting the client device to a host device, or when the address of the client device is stored at the host devices and there is polling of the client device by one or more host devices, the polling used when connecting the client device to a host device.

Advantageously, the connection process further comprises receiving the message from the client device at the connected host device, the message requesting transferring the connection to a different host device, and transmitting a message from the connected host to the client device detailing the other hosts in the plurality of hosts. This allows the client device to see which hosts are connected to the system, and then choose the actual host to which the client device wishes to connect. The user, via the client device will select a different host and the currently connected host will disconnect and hand over to the new host. All of the handover is handled at the host end of the system, but there is no hardware switch carrying out the change in host.

Preferably the methodology further comprises, following the connected host device disconnecting the connection to the client device, transmitting a message from the disconnected host device to the different host device, the message instructing the different host device to connect to the client device. In this embodiment, the disconnected host instructs the new host to connect to the client device, as a way of ensuring the new connection, without any intelligent behaviour on the client side. This supports a thin client being used as the user interface to the virtual KVM system.

Embodiments of the present invention will now be described, by way of example only, with reference to the accompanying drawings, in which:-
Figure 1 is a schematic diagram of a prior art system,
Figure 2 is a schematic diagram of a system according to a first embodiment of the invention,
Figure 3 is a flowchart of a generalised method of operating the system of Figure 2, and
Figures 4 to 6 are respective flowcharts of more detailed methods of operating the system of Figure 2.

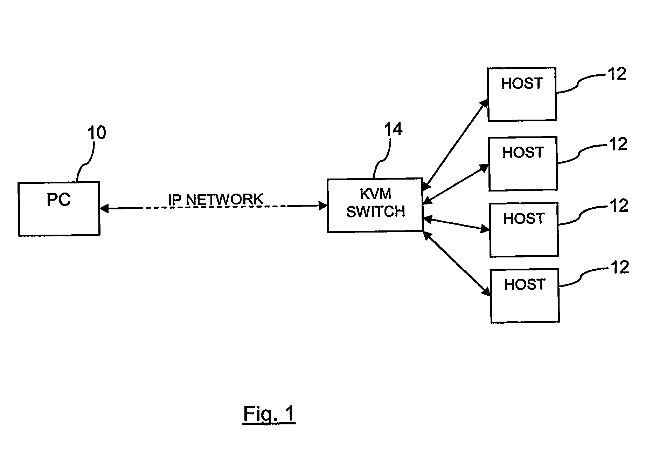

In a traditional KVM environment, as shown in Figure 1, a client device 10 connects to multiple hosts 12 via a KVM switch 14. The KVM switch 14 is physically attached to the hosts 12 that it is controlling, thus defining the set of hosts 12 that the switch 14 (and therefore the connecting client 10) can control. The client device 10 is a personal computer, and a relatively heavyweight device (in terms of processing capability) is required in the prior art KVM systems, such as the one shown in Figure 1.

If there is a need to add further hosts 12 (either by hosts becoming active or newly connected) and/or to remove hosts (hosts becoming inactive or disconnected) then this is detected by the switch 14, which can change the group membership details. These details are presented to the client 10, as requested, to allow selection of the host 12 to which the client wishes to connect. The switch 14 controls access to this group of hosts 12, usually requiring credentials from the client device 10 before allowing access. The protocol running over the IP network may be proprietary to the specific KVM switch vendor, or may be an open protocol such as VNC.

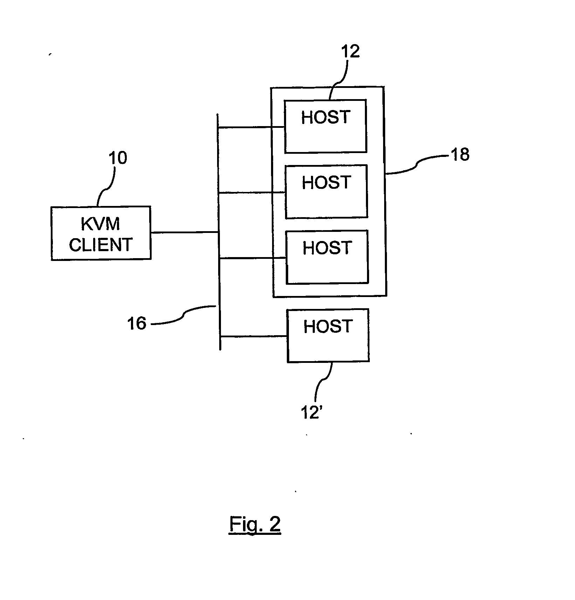

An example embodiment of the invention is shown in Figure 2, in which a lightweight client device 10 is connected to hosts 12 via an IP network 16 (such as a local Intranet or wide area Internet). The system shown in Figure 2 comprises the KVM client device 10 and a plurality of host devices 12, and is for handling a connection between the client device 10 and the plurality of host devices 12. In the decentralised model used in this system, the KVM client 10 is directly connected to the hosts 12, and may have connectivity to hosts 12 it does not want (or is not allowed) to control. In this embodiment, the KVM client 10 has less functionality than a full PC. For example, the client device 10 may comprise a networked keyboard, video display and mouse using a NIVO device available from DisplayLink, Inc.

To execute initialisation, the KVM client device 10 may allow the user to enter the name and/or address of one of the hosts 12 to be controlled, and send a message to that host requesting service. From this point on, the hosts 12 can control the session and the switching functionality. As an alternative, the hosts 12 may look for the KVM client 10 instead, and the first host 12 that finds the KVM client 10 connects to that KVM client 10. Alternatively, protocols such as DHCP may be used to direct the KVM client 10 to a default host 12, which may then redirect the KVM client 10 to another host 12 specific to that KVM client 10. For example, the KVM client 10 may first connect to the gateway address on the network 16, or to a named server, or to a host 12 specified in response to a domain name request. Alternatively, the KVM client 10 may first connect to a predetermined host 12.

The system of Figure 2 supports various functions such as group selection, with a group 18 being shown in the Figure. The selected host 12 may present a list of other available hosts 12 (the list may be subject to access policy/configuration) to the client device 10. The client 10 sends back key/mouse presses selecting a desired host 12. This information is distributed to the relevant host 12. The switching operation delivered by the system allows the client device 10 to send (via a mechanism such as a hotkey press) a message to the host 12 requesting a switch. The host 12 relinquishes control and the next host 12 in the group list takes over.

It is possible to add and remove hosts 12 from the logical group 18 of hosts 12. Another hotkey press from the client device 10 can be used to request a list of available hosts from the currently connected host 12. Hosts 12 can then be added and/or deleted. This process can be carried out manually from the client device 10 end of the system, or hosts themselves, can be logically added to groups. In respect of any failure in the system, if a host 12 fails to take over control of the client device 10, a different host 12 from the failed host 12 must detect the lack of connection to the client device 10 and establish a connection itself. All other hosts 12, in this event, would update the group list.

Compared with the prior art arrangements, this system also scales to large numbers of hosts 12 more cheaply because as many hosts 12 may be added to the network 16 as required, each running the host control software but otherwise being standard networked PCs. Also, the hosts 12 may be distributed as widely as the network technology allows, which may comprise different rooms or even different buildings within the same local area network, all of which can still function without the need for any local switching hardware of the type required in prior art systems.

Whereas the prior art hardware KVM switch requires individual keyboard, video and mouse ports for each host, and each host must be connected to the KVM switch via standard keyboard, video and mouse connections, both the number of hosts and the distance of each host from the KVM switch are limited by the number of ports on the KVM switch and the short length of VGA video cables. Extending the length of keyboard, video or mouse cables incurs signal quality issues, as these interfaces are not designed to run over long distances.

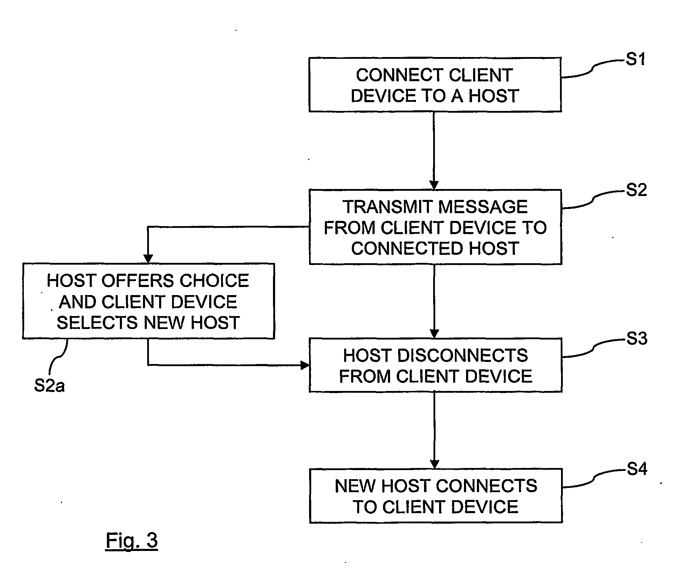

The generalised method of handling the connection between the client device 10 and the plurality of host devices 12 is summarised in Figure 3. The method comprises the first step, S1 of connecting the client device 10 to a host device 12 of the plurality of host devices 12. This connection can be initiated from either end, depending upon the configuration of the overall system. For example, as discussed above, the client device 10 could connect to a known host 12 either directly, or through the mediation of a network management component. Alternatively, a specific host (such as the host 12' of Figure 2) could connect directly to the client device 10, which again reduces the complexity needed on the client side.

Once the user of the client device wishes to switch to a different host 12, then at step S2, there is the transmission of a message from the client device 10 to the connected host device 12, the message requesting transferring the connection to a different host device 12. This message may be a specific instruction to switch to a named host device, or may be a generalised instruction that the client device 10 wishes to switch. If the message is a simple instruction to switch, then the host replies with a list of currently available hosts and the client device must execute a choice which is then transmitted back to the currently connected host 12, as shown at step S2a.

Once a new host has been identified, then the connected host device 12 disconnects the connection to the client device 10, at step S3 and the new host 12 will connect to the client device 10 (step S4). All of the switching is handled at the host end of the system, via a distributed algorithm managed by the host devices. One embodiment of this algorithm is for the connected host device to signal to the new host that it must connect to the client device 10 in the near future. The currently connected host then drops its connection and the new host has responsibility for connecting to the client device 10.

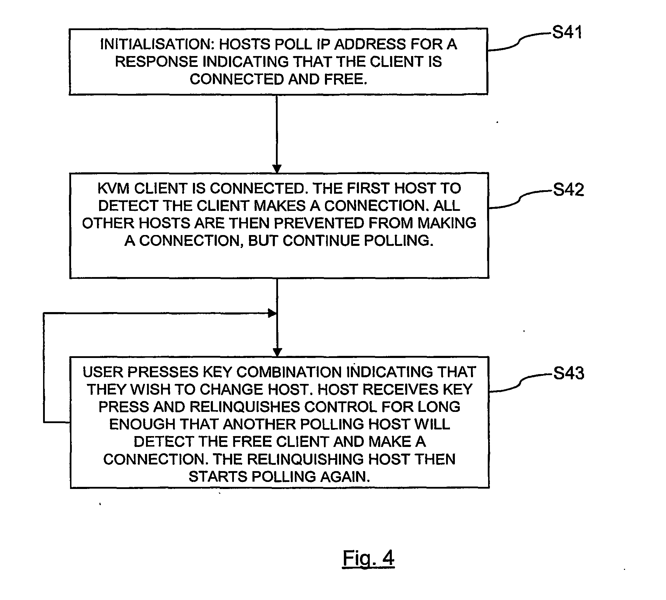

Figure 4 shows a more detailed embodiment of the process of managing the connection between the client device 10 and the hosts 12. In this flowchart there are the assumed pre-conditions that the KVM client 10 has a fixed IP address, that all controllable hosts 12 are configured with this address, and that the hosts 12 initiate the connections to the client device 10.

At step S41 the initialisation occurs. All of the hosts 12 poll the fixed IP address of the client 10 for a response indicating that the client 10 is connected and free. As a result the KVM client 10 is connected. The first host 12 to detect the client 10 makes the connection. All of the other hosts 12 are then prevented from making a connection, but continue polling (step S42).

If the user wishes to change host, then the user presses a key combination indicating that they wish to change host 12 (step S43). The connected host 12 receives a message corresponding to the key press and relinquishes control for long enough that another polling host 12 will detect the free client 10 and make a connection. The relinquishing host 12 then starts polling again. The first host 12 to detect the free client 10 initiates the connection to the client 10.

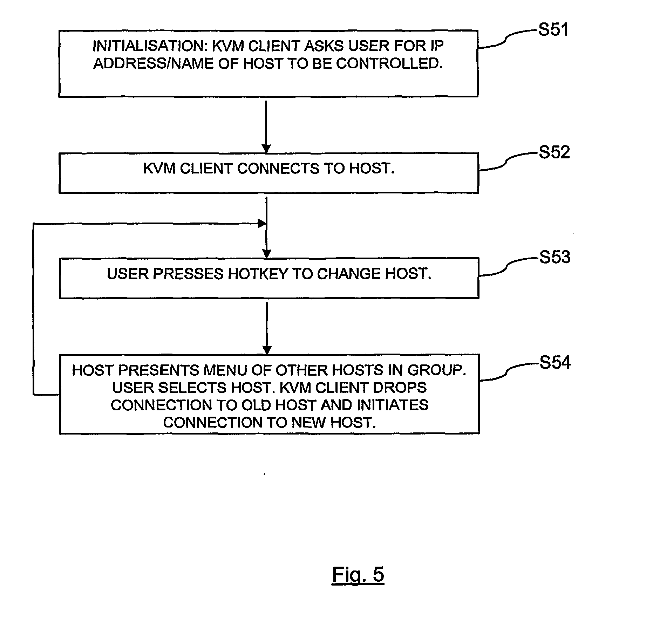

An alternative to Figure 4 is shown in the flowchart of Figure 5. The assumed pre-conditions of this embodiment are that the KVM client 10 is able to initiate connections, that the KVM client 10 can have dynamic IP address but needs to know/find out/request from the user the IP address of at least one controllable host, and that the hosts 12 collaborate to provide more controlled switching. At step S51 (initialisation) the KVM client 10 asks the user for an IP address/name of a host 12 to be controlled. The KVM client 10 connects directly to the host (step S52). When the user wishes to change host 12, they send a message to the host 12 to which they are currently connected, and that host 12 responds and presents a menu of the other hosts 12 in group, at step S53. Following this, at step S54, the user selects a new host 12. The KVM client 10 drops the connection to the old host 12 and initiates a connection to a new host 12.

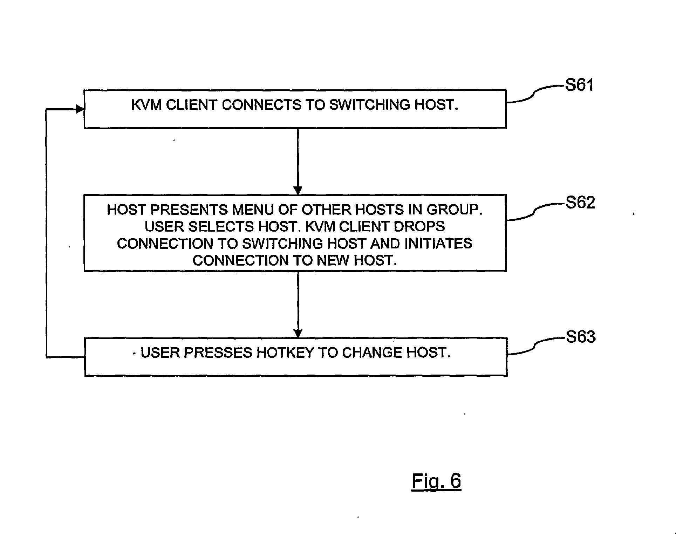

A third embodiment of the process is shown in the flowchart of Figure 6. The assumed pre-conditions of this embodiment are the same as the previous embodiment except that just one of the hosts 12 provides the switching role. The KVM client 10 is configured with the address of this host 12. At step S61, the KVM client 10 connects to the designated switching host 12. This host 12, at step S62, presents a menu of the other hosts 12 in the group. The user selects the host 12 to which they wish to connect. The KVM client 10 drops the connection to the switching host 12 and initiates the connection to the new host 12. If at any time the user wishes to change to another host, then the user presses the hotkey to change host, as shown at step 563.

As a further alternative, the KVM client 10 may comprise multiple USB interfaces, and connect to multiple hosts 12 using USB connections. In this example, the KVM client 10 may contain switching hardware to connect to a first (default) USB host 12, and reconnect to other hosts 12 under the control of the first USB host 12, or the currently connected USB host 12.

## Claims

1. A method of handling a connection between a keyboard, video, mouse, KVM, client device and a plurality of host devices, the method providing a distributed algorithm for KVM switching and comprising
o connecting the client device to a host device of the plurality of host devices,
o transmitting a message from the client device to the connected host device, the message requesting transferring the connection to a different host device,
o the connected host device disconnecting the connection to the client device, and
o the different host device connecting to the client device.

2. A method according to claim 1, wherein the step of connecting the client device to a host device of the plurality of host devices is initiated by the client device.

3. A method according to claim 2, and further comprising storing, at the client device, an address of a host device, the address used when connecting the client device to a host device.

4. A method according to claim 1, wherein the step of connecting the client device to a host device of the plurality of host devices is initiated by a host device.

5. A method according to claim 4, and further comprising polling the client device by one or more host devices, the polling used when connecting the client device to a host device.

6. A method according to any preceding claim, and further comprising receiving the message from the client device at the connected host device, the message requesting transferring the connection to a different host device, and transmitting a message from the connected host to the client device detailing the other hosts in the plurality of hosts.

7. A method according to any preceding claim, and further comprising, following the connected host device disconnecting the connection to the client device, transmitting a message from the disconnected host device to the different host device, the message instructing the different host device to connect to the client device.

8. A system comprising a keyboard, video, mouse, KVM, client device and a plurality of host devices, and for handling a connection between the client device and the plurality of host devices and for providing a distributed algorithm for KVM switching, wherein
o the system is arranged to connect the client device to a host device of the plurality of host devices,
o the client device is arranged to transmit a message to the connected host device, the message requesting transferring the connection to a different host device,
o the connected host device is arranged to disconnect the connection to the client device, and
o the different host device is arranged to connect to the client device.

9. A system according to claim 8, wherein the connecting of the client device to a host device of the plurality of host devices is initiated by the client device.

10. A system according to claim 9, wherein the client device is arranged to store an address of a host device, the address used when connecting the client device to a host device.

11. A system according to claim 8, wherein the connecting of the client device to a host device of the plurality of host devices is initiated by a host device.

12. A system according to claim 11, wherein one or more host devices are arranged to poll the client device, the polling used when connecting the client device to a host device.

13. A system according to any one of claims 8 to 12, wherein the connected host device is arranged to receive the message from the client device, the message requesting transferring the connection to a different host device, and to transmit a message to the client device detailing the other hosts in the plurality of hosts.

14. A system according to any one of claims 8 to 13, wherein the connected host device is arranged, following the disconnection of the connection to the client device, to transmit a message to the different host device, the message instructing the different host device to connect to the client device.

## Patentansprüche

1. Eine Methode zur Behandlung einer Verbindung zwischen einer KVM-Client-Vorrichtung, (d.h. einer Keyboard- [Tastatur-], Video-, Maus-Client-Vorrichtung), und einer Vielzahl von Host-Vorrichtungen, wobei die Methode einen zum KVM-Switching verteilten Algorithmus liefert und Folgendes umfasst:
o Verbindung der Client-Vorrichtung mit einer Host-Vorrichtung der Vielzahl von Host-Vorrichtungen,
o Übermittlung einer Nachricht von der Client-Vorrichtung zur verbundenen Host-Vorrichtung, wobei die Nachricht die Übertragung der Verbindung an eine andere Host-Vorrichtung fordert,
o wobei die verbundene Host-Vorrichtung die Verbindung mit der Client-Vorrichtung unterbricht und
o die andere Host-Vorrichtung sich mit der Client-Vorrichtung verbindet.

2. Eine Anspruch 1 entsprechende Methode, bei welcher der Schritt, die Client-Vorrichtung mit einer Host-Vorrichtung der Vielzahl von Host-Vorrichtungen zu verbinden, von der Client-Vorrichtung initiiert wird.

3. Eine Anspruch 2 entsprechende Methode, die weiterhin das Speichern einer Adresse einer Host-Vorrichtung bei der Client-Vorrichtung umfasst, wobei die Adresse benutzt wird, wenn die Client-Vorrichtung mit einer Host-Vorrichtung verbunden wird.

4. Eine Anspruch 1 entsprechende Methode, bei welcher der Schritt, die Client-Vorrichtung mit einer Host-Vorrichtung der Vielzahl von Host-Vorrichtungen zu verbinden, von einer Host-Vorrichtung initiiert wird.

5. Eine Anspruch 4 entsprechende Methode, bei welcher die Client-Vorrichtung weiterhin von einer oder mehreren Host-Vorrichtungen abgefragt und diese Abfrage benutzt wird, wenn die Client-Vorrichtung mit einer Host-Vorrichtung verbunden wird.

6. Eine jeglichem vorstehenden Anspruch entsprechende Methode, die weiterhin den Empfang der Nachricht der Client-Vorrichtung an der verbundenen Host-Vorrichtung umfasst, wobei die Nachricht die übertragung der Verbindung an eine andere Host-Vorrichtung fordert und eine Nachricht von dem verbundenen Host an die Client-Vorrichtung übertragen wird, in welcher die anderen Hosts der Vielzahl von Hosts einzeln aufgeführt sind.

7. Eine jeglichem vorstehenden Anspruch entsprechende Methode, die, nachdem die verbundene Host-Vorrichtung die Verbindung mit der Client-Vorrichtung unterbrochen hat, weiterhin die Übermittlung einer Nachricht von der abgetrennten Host-Vorrichtung an die andere Host-Vorrichtung umfasst, wobei die Nachricht die andere Host-Vorrichtung zur Verbindung mit der Client-Vorrichtung anweist.

8. Ein System, das eine Keyboard-, Video-, Maus- (KVM-) Client-Vorrichtung und eine Vielzahl von Host-Vorrichtungen sowie die Behandlung einer Verbindung zwischen der Client-Vorrichtung und der Vielzahl von Host-Vorrichtungen sowie die Bereitstellung eines verteilten Algorithmus zum KVM-Switching umfasst, wobei
o das System angeordnet ist, um die Client-Vorrichtung mit einer Host-Vorrichtung der Vielzahl von Host-Vorrichtungen zu verbinden,
o die Client-Vorrichtung angeordnet ist, um eine Nachricht an die verbundene Host-Vorrichtung zu übertragen, und diese Nachricht die Übertragung der Verbindung an eine andere Host-Vorrichtung fordert,
o die verbundene Host-Vorrichtung angeordnet st, um die Verbindung mit der Client-Vorrichtung zu trennen, und
o die andere Host-Vorrichtung zur Verbindung mit der Client-Vorrichtung angeordnet ist.

9. Ein Anspruch 8 entsprechendes System, bei welchem die Verbindung der Client-Vorrichtung mit einer Host-Vorrichtung der Vielzahl von Host-Vorrichtungen von der Client-Vorrichtung initiiert wird.

10. Ein Anspruch 9 entsprechendes System, bei welchem die Client-Vorrichtung angeordnet ist, um eine Adresse einer Host-Vorrichtung zu speichern, wobei die Adresse benutzt wird, wenn die Client-Vorrichtung mit einer Host-Vorrichtung verbunden wird.

11. Ein Anspruch 8 entsprechendes System, bei welchem die Verbindung der Client-Vorrichtung mit einer Host-Vorrichtung der Vielzahl von Host-Vorrichtungen von einer Host-Vorrichtung initiiert wird.

12. Ein Anspruch 11 entsprechendes System, bei welchem eine oder mehrere Host-Vorrichtungen angeordnet sind, um die Client-Vorrichtung abzufragen, wobei die Abfrage benutzt wird, wenn die Client-Vorrichtung mit einer Host-Vorrichtung verbunden wird.

13. Ein jeglichen Ansprüchen von 8 bis 12 entsprechendes System, bei welchem die verbundene Host-Vorrichtung zum Empfang der Nachricht der Client-Vorrichtung angeordnet ist, wobei die Nachricht die Übertragung der Verbindung an eine andere Host-Vorrichtung sowie die Übertragung einer Nachricht an die Client-Vorrichtung fordert und die anderen Hosts der Vielzahl von Hosts einzeln aufführt.

14. Ein jeglichen Ansprüchen von 8 bis 13 entsprechendes System, bei welchem die verbundene Host-Vorrichtung angeordnet ist, um nach der Trennung der Verbindung mit der Client-Vorrichtung eine Nachricht an die andere Host-Vorrichtung zu übertragen, wobei die Nachricht die andere Host-Vorrichtung zur Verbindung mit der Client-Vorrichtung anweist.

## Revendications

1. Procédé d'établissement des attributs d'une connexion entre un dispositif client doté d'un commutateur KVM clavier, vidéo, souris et une pluralité de dispositifs hôtes, le procédé prévoyant un algorithme réparti destiné à une commutation KVM et comprenant
o la connexion du dispositif client à un dispositif hôte de la pluralité des dispositifs hôtes,
o la transmission d'un message du dispositif client au dispositif hôte connecté, le message demandant le transfert de la connexion à un dispositif hôte différent,
o le dispositif hôte connecté déconnectant la connexion au dispositif client, et
o le dispositif hôte différent se connectant au dispositif client.

2. Procédé selon la revendication 1, dans lequel l'étape de connexion du dispositif client à un dispositif hôte de la pluralité de dispositifs hôtes est démarrée par le dispositif client.

3. Procédé selon la revendication 2 et comprenant en outre le stockage, au niveau du dispositif client, d'une adresse de dispositif hôte, l'adresse étant utilisée lors de la connexion du dispositif client au dispositif hôte.

4. Procédé selon la revendication 1, dans lequel l'étape de connexion du dispositif client à un dispositif hôte de la pluralité des dispositifs hôtes est démarrée par un dispositif hôte.

5. Procédé selon la revendication 4, et comprenant en outre l'interrogation du dispositif client par l'un ou plusieurs dispositifs hôtes, l'interrogation étant utilisée lors de la connexion du dispositif client à un dispositif hôte.

6. Procédé selon l'une quelconque des revendications précédentes, et comprenant en outre la réception du message du dispositif client au niveau du dispositif hôte connecté, le message demandant le transfert de la connexion à un dispositif hôte différent et la transmission d'un message depuis l'hôte connecté au dispositif client détaillant les autres hôtes parmi la pluralité d'hôtes.

7. Procédé selon l'une quelconque des revendications précédentes, et comprenant en outre, suite à la déconnexion par le dispositif hôte connecté de la connexion au dispositif client, la transmission d'un message depuis le dispositif hôte déconnecté à un différent dispositif hôte, le message donnant pour instruction au dispositif hôte différent de se connecter au dispositif client.

8. Système comprenant un dispositif client constitué par un commutateur KVM clavier, vidéo, souris et une pluralité de dispositifs hôtes et servant à l'établissement des attributs d'une connexion entre le dispositif client et la pluralité de dispositifs hôtes et à la provision d'un algorithme réparti destiné à une commutation KVM, dans lequel
o le système est configuré afin de connecter le dispositif client à un dispositif hôte de la pluralité des dispositifs hôtes,
o le dispositif client est configuré afin de transmettre un message au dispositif hôte connecté, le message demandant le transfert de la connexion à un dispositif hôte différent,
o le dispositif hôte connecté est configuré afin de déconnecter la connexion au dispositif client, et
o le dispositif hôte différent est configuré afin de se connecter au dispositif client.

9. Système selon la revendication 8, dans lequel la connexion du dispositif client à un dispositif hôte de la pluralité des dispositifs hôtes est démarrée par le dispositif client.

10. Système selon la revendication 9, dans lequel le dispositif client est configuré afin de stocker une adresse d'un dispositif hôte, l'adresse étant utilisée lors de la connexion du dispositif client à un dispositif hôte.

11. Système selon la revendication 8, dans lequel la connexion du dispositif client à un dispositif hôte de la pluralité des dispositifs hôtes est démarrée par un dispositif hôte.

12. Système selon la revendication 11, dans lequel un ou plusieurs dispositifs hôtes sont configurés afin d'interroger le dispositif client, l'interrogation étant utilisée lors de la connexion du dispositif client à un dispositif hôte.

13. Système selon l'une quelconque des revendications 8 à 12, dans lequel le dispositif hôte connecté est configuré afin de recevoir le message du dispositif client, le message demandant de transférer la connexion à un dispositif hôte différent et de transmettre un message au dispositif client détaillant les autres hôtes de la pluralité d'hôtes.

14. Système selon l'une quelconque des revendications 8 à 13, dans lequel le dispositif hôte connecté est configuré, suite à la déconnexion de la connexion au dispositif client, afin de transmettre un message à un dispositif hôte différent, le message donnant pour instruction au dispositif hôte différent de se connecter au dispositif client.
